# EUROPÄISCHE PATENTANMELDUNG

(11) **EP 3 632 275 A1**
(43) Veröffentlichungstag der Anmeldung: **08.04.2020**
(21) Anmeldenummer: 19196710.8
(22) Anmeldetag: 11.09.2019
(51) Int. Cl.: A47J 43/044, A47J 43/046, A47J 43/07

(54) **HAUSHALTSGERÄTESYSTEM**

(30) Priorität: 05.10.2018 ES 201830969
(71) Anmelder: BSH Hausgeräte GmbH, 81739 München (DE)
(72) Erfinder: Franco Gutierrez, Carlos, 50017 Zaragoza (ES); Marzo Alvarez, Teresa Del Carmen, 50012 Zaragoza (ES); Paesa Garcia, David, 50015 Zaragoza (ES); Parra Borderías, Maria, 50006 Zaragoza (ES); Rodriguez Larrosa, Agostina, 50011 Zaragoza (ES); Villanueva Valero, Beatriz, 50011 Zaragoza (ES)

(57) **Zusammenfassung**

Um eine gattungsgemäße Vorrichtung mit verbesserten Eigenschaften hinsichtlich eines Bedienkomforts bereitzustellen, wird ein Haushaltsgerätesystem (10a-b) vorgeschlagen mit zumindest einer Rühreinheit (12a-b), welche zu einem Rühren zumindest eines Mediums (14a-b) vorgesehen ist, und mit zumindest einer Zähigkeitserfassungseinheit (16a-b), welche in wenigstens einem Betriebszustand mittels der Rühreinheit (12a-b) zumindest einen Zähigkeitsparameter des Mediums (14a-b) detektiert.

## Beschreibung

Die Erfindung betrifft ein Haushaltsgerätesystem nach dem Anspruch 1 und ein Verfahren zu einem Betrieb eines Haushaltsgerätesystems nach dem Anspruch 14.

Aus dem Stand der Technik ist bereits ein Haushaltsgerätesystem bekannt, welches eine Rühreinheit aufweist. In einem Betriebszustand verrührt die Rühreinheit ein in einem Lebensmittelaufnahmeraum eines Gargeschirrs befindliches Medium. Eine Steuereinheit eines Kochfelds steuert die Rühreinheit in einem Betriebszustand gemäß einem in einer Speichereinheit der Steuereinheit gespeicherten Programmablauf, und zwar insbesondere unabhängig von einem Zähigkeitsparameter des Mediums.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 und 14 gelöst, während vorteilhafte Ausgestaltungen und Weiterbildungen der Erfindung den Unteransprüchen entnommen werden können.

Es wird ein Haushaltsgerätesystem vorgeschlagen mit zumindest einer Rühreinheit, welche zu einem Rühren zumindest eines Mediums vorgesehen ist, und mit zumindest einer Zähigkeitserfassungseinheit, welche in wenigstens einem Betriebszustand mittels der Rühreinheit zumindest einen Zähigkeitsparameter des Mediums detektiert.

Durch eine derartige Ausgestaltung kann insbesondere ein hoher Bedienkomfort erreicht werden. Insbesondere kann eine hohe Zufriedenheit bei einem Bediener ermöglicht werden, wodurch insbesondere eine Markentreue gewährleistet werden kann. Es kann insbesondere eine optimierte Durchführung eines Rezepts ermöglicht werden, da insbesondere mittels des Zähigkeitsparameters zumindest eine zusätzliche Information zur Verfügung gestellt werden kann. Insbesondere kann eine Zähigkeitserfassungseinheit für verschiedene Typen an Haushaltsgeräten und/oder vorteilhaft an Kochfeldern vorgesehen sein, wodurch insbesondere eine hohe Flexibilität und/oder eine hohe Leistungsfähigkeit der Typen an Haushaltsgeräten und/oder vorteilhaft an Kochfeldern erzielt werden kann.

Unter einem "Haushaltsgerätesystem" soll insbesondere ein System verstanden werden, welches zumindest ein Haushaltsgeräteobjekt und/oder zumindest ein Haushaltsgerät und/oder zumindest ein Haushaltsgerätezubehörobjekt aufweist, und welches insbesondere zusätzlich zumindest ein Küchenobjekt und/oder zumindest eine weitere Baueinheit aufweisen könnte, das/die insbesondere von einem Haushaltsgeräteobjekt und/oder von einem Haushaltsgerät und/oder von einem Haushaltsgerätezubehörobjekt verschieden ausgebildet ist. Unter einem "Haushaltsgeräteobjekt" soll insbesondere zumindest ein Teil, insbesondere eine Unterbaugruppe, eines Haushaltsgeräts, insbesondere eines Gargeräts und vorteilhaft eines Induktionsgargeräts, verstanden werden. Unter einem "Haushaltsgerätezubehörobjekt" soll insbesondere ein Objekt verstanden werden, welches insbesondere zu einem Gebrauch und/oder zu einer Verwendung mit einem Haushaltsgerät vorgesehen ist und/oder welches insbesondere als ein Zubehör für ein Haushaltsgerät ausgebildet ist. Unter einem "Küchenobjekt" soll insbesondere ein Objekt verstanden werden, welches zu einem Gebrauch und/oder zu einer Verwendung und/oder zu einer Anordnung in einer Küche vorgesehen ist, und zwar insbesondere zu einer Bearbeitung und/oder Behandlung und/oder Aufbewahrung zumindest eines Lebensmittels.

Beispielsweise könnte zumindest ein Haushaltsgerät ein Rührgerät und/oder eine Rührmaschine und/oder ein Mixer und/oder eine Küchenmaschine und/oder eine Knetmaschine sein. Zumindest ein Haushaltsgerät könnte beispielsweise ein Backofen und/oder ein Kochfeld und/oder eine Mikrowelle und/oder ein Grillgerät sein.

Beispielsweise könnte das Haushaltsgerätesystem zumindest ein Haushaltsgeräteobjekt aufweisen, welches insbesondere eine Unterbaugruppe eines Haushaltsgeräts sein könnte. Zumindest ein Haushaltsgeräteobjekt könnte beispielsweise zumindest eine Steuereinheit und/oder zumindest eine Bedienerschnittstelle und/oder zumindest eine Haushaltsgeräte-Gehäuseeinheit und/oder zumindest eine Haushaltsgeräte-Heizeinheit und/oder zumindest ein Wechselrichter und/oder zumindest eine Geräteplatte, welche insbesondere als Kochfeldplatte ausgebildete Aufstellplatte ausgebildet sein könnte, und/oder zumindest eine Abzugseinheit und/oder zumindest eine Geräteelektronik sein. Alternativ oder zusätzlich, insbesondere zu dem Haushaltsgeräteobjekt, könnte das Haushaltsgerätesystem beispielsweise zumindest ein Haushaltsgerät und insbesondere zusätzlich zu dem Haushaltsgerät zumindest eine weitere Baueinheit aufweisen, wie insbesondere zumindest eine Geräteplatte, welche insbesondere als Arbeitsplatte ausgebildete Aufstellplatte ausgebildet sein könnte.

Beispielsweise könnte zumindest ein Haushaltsgerätezubehörobjekt eine Sensoreinheit zur externen Messung einer Temperatur eines Gargeschirrs und/oder eines Garguts sein. Zumindest ein Haushaltsgerätezubehörobjekt könnte beispielsweise alternativ oder zusätzlich ein Gargeschirr und/oder eine Aufstelleinheit und/oder ein Kontaktmodul sein, welches insbesondere zu einer Anordnung an dem Gargeschirr und/oder an der Aufstelleinheit vorgesehen sein könnte. Insbesondere könnte zumindest ein Haushaltsgerätezubehörobjekt alternativ oder zusätzlich ein Adapter sein, welcher insbesondere zu einer Kopplung mit zumindest einem Küchenobjekt und insbesondere zu einem Aufstellen und/oder Auflegen auf der Geräteplatte vorgesehen sein könnte.

Zumindest ein Küchenobjekt könnte beispielsweise eine Küchenmaschine und/oder eine Unterbaugruppe einer Küchenmaschine, insbesondere ein Küchenmaschinenbehälter, sein. Alternativ oder zusätzlich könnte zumindest ein Küchenobjekt ein Reinigungsgerät und/oder ein Kältegerät sein. Zumindest eine weitere Baueinheit könnte beispielsweise ein Mobilgerät und/oder eine Recheneinheit, wie beispielsweise ein Computer, sein.

Unter einer "Rühreinheit" soll insbesondere eine Einheit verstanden werden, welche zumindest ein Rührorgan aufweist, welches in wenigstens einem Betriebszustand insbesondere wenigstens zu einem Großteil innerhalb des Mediums und vorteilhaft in Kontakt mit dem Medium angeordnet ist, und welche insbesondere mittels des Rührorgans das Medium in wenigstens einem Betriebszustand verrührt. Unter "Rühren" soll insbesondere Vermischen und/oder Kneten und/oder Umrühren verstanden werden. Das Rührorgan könnte beispielsweise wenigstens zu einem Großteil aus Kunststoff ausgebildet sein. Beispielsweise könnte das Rührorgan wenigstens zu einem Großteil aus Polyamid und/oder aus Polypropylen und/oder aus Silikon ausgebildet sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Die Rühreinheit weist insbesondere zumindest eine Antriebseinheit auf, welche insbesondere zu einem Antrieb des Rührorgans vorgesehen ist und welche in wenigstens einem Betriebszustand insbesondere das Rührorgan antreibt. Insbesondere weist die Antriebseinheit zumindest einen Motor zu einem Antrieb des Rührorgans auf. Die Rühreinheit, insbesondere die Antriebseinheit, ist insbesondere zu einer Ansteuerung durch die Zähigkeitserfassungseinheit vorgesehen. Insbesondere weist die Rühreinheit zumindest eine Empfangseinheit auf, welche insbesondere zu einem Empfang zumindest eines Signals und/oder zumindest eines Befehls von der Zähigkeitserfassungseinheit vorgesehen ist. Die Zähigkeitserfassungseinheit steuert und/oder regelt insbesondere die Rühreinheit in wenigstens einem Betriebszustand.

Das Rührorgan der Rühreinheit ist insbesondere drehbar um zumindest eine Drehachse gelagert. In wenigstens einem Betriebszustand rotiert die Antriebseinheit, insbesondere in Abhängigkeit einer Ansteuerung durch die Zähigkeitserfassungseinheit, das Rührorgan, um insbesondere mittels des Rührorgans das Medium zu verrühren.

Zumindest ein Medium könnte beispielsweise ein Feststoff sein, und zwar insbesondere eine Zutat eines Teigs. Insbesondere könnte die Rühreinheit zu einem Rühren von zumindest zwei, insbesondere zumindest drei, vorteilhaft zumindest vier, besonders vorteilhaft zumindest fünf und vorzugsweise mehreren Medien, welche insbesondere Feststoffe sein könnten, insbesondere mit zumindest einem Medium, welches ein Fluid ist, vorgesehen sein. Zumindest ein Medium könnte beispielsweise ein Fluid, insbesondere ein Gar und/oder vorteilhaft eine Flüssigkeit, sein.

Unter einer "Zähigkeit" eines Mediums soll insbesondere ein Widerstand des Mediums gegen ein Rühren durch die Rühreinheit verstanden werden. Insbesondere für den Fall, dass das Medium ein Fluid ist, entspricht die Zähigkeit des Mediums einer Viskosität des Mediums und/oder entspricht der Zähigkeitsparameter einem Viskositätsparameter. Unter einer "Viskosität" eines Mediums, welches insbesondere ein Fluid ist, soll insbesondere eine Zähflüssigkeit und/oder eine Zähigkeit des Mediums verstanden werden. Insbesondere ist die Viskosität eines Mediums umso größer, desto dickflüssiger und/oder desto weniger fließfähig das Medium ist. Insbesondere ist die Viskosität eines Mediums umso niedriger, desto dünnflüssiger und/oder desto fließfähiger das Medium ist.

Unter einem "Zähigkeitsparameter" soll insbesondere ein Parameter verstanden werden, welcher eine Zähigkeit des Mediums und/oder eine Viskosität eines Mediums kennzeichnet. Der Zähigkeitsparameter könnte beispielsweise die Zähigkeit des Mediums und/oder die Viskosität des Mediums selbst sein. Alternativ oder zusätzlich könnte der Zähigkeitsparameter beispielsweise ein Parameter sein, welcher von der Zähigkeit des Mediums und/oder von der Viskosität des Mediums abhängig ist.

Unter einer "Zähigkeitserfassungseinheit" soll insbesondere eine Einheit verstanden werden, welche zumindest einen Detektor zu einer Detektion und/oder zu einer Erfassung zumindest einer Kenngröße aufweist, welche eine Zähigkeit und/oder eine Viskosität kennzeichnet und/oder charakterisiert. Insbesondere weist die Zähigkeitserfassungseinheit, insbesondere zusätzlich zu dem Detektor, zumindest eine Steuereinheit auf, welche insbesondere zu einer Auswertung der Kenngröße vorgesehen ist und welche insbesondere in wenigstens einem Betriebszustand in Abhängigkeit von der Kenngröße die Rühreinheit ansteuert. Insbesondere könnte die Zähigkeitserfassungseinheit zumindest zwei, insbesondere zumindest drei, vorteilhaft zumindest vier, besonders vorteilhaft zumindest fünf, vorzugsweise zumindest sechs und besonders bevorzugt mehrere Detektoren aufweisen, welche sich insbesondere in einer Genauigkeit unterscheiden und/oder den Zähigkeitsparameter in unterschiedlicher Genauigkeit detektieren könnten.

Zumindest ein Detektor der Zähigkeitserfassungseinheit könnte beispielsweise zu einer Detektion zumindest einer elektrischen Kenngröße, beispielsweise eines elektrischen Stroms und/oder eines elektrischen Widerstands und/oder einer elektrischen Spannung, insbesondere der Antriebseinheit, vorgesehen sein. Insbesondere könnte zumindest ein Detektor der Zähigkeitserfassungseinheit zu einer Detektion zumindest einer Umdrehungszahl der Antriebseinheit und/oder des Rührorgans vorgesehen sein. Zumindest ein Detektor der Zähigkeitserfassungseinheit könnte beispielsweise zu einer Detektion zumindest einer Geschwindigkeit und/oder zumindest einer Geschwindigkeitsänderung und/oder zumindest einer Beschleunigung und/oder zumindest einer Beschleunigungsänderung der Antriebseinheit und/oder des Rührorgans vorgesehen sein.

Unter einer "Steuereinheit" soll insbesondere eine elektronische Einheit verstanden werden, welche in wenigstens einem Betriebszustand zumindest eine Gerätefunktion und/oder zumindest eine Gerätehauptfunktion, insbesondere eine Beheizung zumindest eines Gargeschirrs und/oder ein Rühren der Rühreinheit, steuert und/oder regelt. Die Steuereinheit weist insbesondere zumindest eine Recheneinheit und insbesondere zusätzlich zu der Recheneinheit zumindest eine Speichereinheit auf, in welcher insbesondere zumindest ein Steuer- und/oder Regelprogramm gespeichert ist, das insbesondere zu einer Ausführung durch die Recheneinheit vorgesehen ist. Insbesondere ist die Steuereinheit dazu vorgesehen, zumindest ein von der Steuereinheit verschiedenes, insbesondere elektrisches und/oder elektronisches Haushaltsgeräteobjekt zu steuern und/oder zu regeln.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Zähigkeitserfassungseinheit den Zähigkeitsparameter in dem Betriebszustand in wenigstens einem Rezeptschritt zumindest eines automatischen Garprozesses detektiert, und zwar insbesondere im Zuge einer Durchführung des Rezeptschritts und/oder während einer Durchführung des Rezeptschritts. Unter einem "Rezeptschritt" soll insbesondere ein Teilabschnitt eines Rezepts verstanden werden, welcher eine insbesondere definierte Zeitdauer und einen insbesondere definierten Verfahrensschritt aufweistg, wie beispielsweise einen Heizschritt und/oder einen Schritt mit einer Interaktion über zumindest eine Ausgabeeinheit und/oder einen Schritt mit einer Interaktion über eine Bedienerschnittstelle, wobei die Zeitdauer insbesondere fest vorgegeben und/oder variabel, wie insbesondere von einer zu einer Bedieneingabe mittels der Bedienerschnittstelle benötigten Zeitdauer abhängig, ausgestaltet ist. Das Haushaltsgerätesystem weist insbesondere zumindest eine Bedienerschnittstelle auf, welche insbesondere zu einer Eingabe und/oder Auswahl von Betriebsparametern vorgesehen ist, wie beispielsweise einer Heizleistung und/oder einer Heizleistungsdichte und/oder einer Zeitdauer und/oder einer Heizzone und/oder eines Rezepts. Unter einem "Rezept" soll insbesondere eine zeitliche Folge von Heizeinstellungen und/oder sonstigen Betriebseinstellungen und/oder Handlungsaufforderungen und/oder von Rezeptschritten zur Zubereitung wenigstens eines Garguts verstanden werden. Insbesondere könnte zumindest eine Heizeinstellung zumindest eine Anzahl an aktivierten Heizeinheiten und/oder zumindest eine Heizdauer und/oder zumindest eine Heizleistung und/oder zumindest eine Heiztemperatur und/oder zumindest eine Heizart, wie beispielsweise Braten und/oder Kochen und/oder Frittieren und/oder Sautieren und/oder Pochieren und/oder Backen und/oder Grillen, sein. Zumindest eine Betriebseinstellung könnten insbesondere zumindest eine Zeitdauer, welche eine Gesamtdauer des Rezepts definiert, und/oder zumindest eine zeitliche Abfolge von Rezeptschritten und/oder zumindest eine Art einer Ausgabe über zumindest eine Ausgabeeinheit, wie beispielsweise optisch und/oder akustisch, sein. Zumindest ein Rezept der Rezepte, insbesondere zumindest zwei, vorteilhaft zumindest drei, besonders vorteilhaft zumindest vier, vorzugsweise zumindest fünf, bevorzugt zumindest sieben und besonders bevorzugt zumindest zehn Rezepte weist/weisen insbesondere zumindest zwei Rezeptschritte auf. Unter einem "automatischen Garprozess" soll insbesondere ein Vorgang und/oder Prozess verstanden werden, welchen die Zähigkeitserfassungseinheit insbesondere im Anschluss an eine einmalige Aktivierung durch eine Bedieneingabe mittels zumindest einer Bedienerschnittstelle wenigstens zu einem Großteil und vorteilhaft vollständig automatisch ausführt und in welchem die Zähigkeitserfassungseinheit insbesondere in wenigstens einem Betriebszustand zumindest einen Betriebsparameter und/oder zumindest einen Heizparameter und/oder zumindest eine Betriebseinstellung automatisch verändert und/oder anpasst. Besonders vorteilhaft weist der automatische Garprozess zumindest einen temperaturgesteuerten Rezeptschritt auf, in welchem insbesondere zumindest eine Geräte-Steuereinheit eines Gargeräts eine Temperatur eines Gargeschirrs und/oder eine Temperatur eines innerhalb eines Lebensmittelaufnahmeraums des Gargeschirrs angeordneten Garguts regelt und/oder steuert und/oder wenigstens im Wesentlichen konstant hält. Unter "automatisch" soll insbesondere selbsttätig und/oder unter Vermeidung einer Einwirkung durch einen Bediener verstanden werden. Der automatische Garprozess könnte beispielsweise zumindest einen temperaturgeregelten Rezeptschritt aufweisen, in welchem die Zähigkeitserfassungseinheit insbesondere eine Temperatur des Mediums wenigstens im Wesentlichen konstant halten könnte, und zwar insbesondere durch Veränderung und/oder Anpassung zumindest einer zur Beheizung des Mediums bereitgestellten Heizleistung. Dadurch kann insbesondere ein optimales Garergebnis erzielt werden, wodurch insbesondere ein hoher Bedienkomfort und/oder eine hohe Zufriedenheit bei einem Bediener erreicht werden kann. Einem Bediener kann insbesondere eine Entscheidung abgenommen und/oder erleichtert werden, wann ein Rezeptschritt beendet ist, und zwar insbesondere da die Zähigkeitserfassungseinheit durch Ermittlung des Zähigkeitsparameters auf einen Prozessstatus rückschließen kann und insbesondere eine Entscheidungsfindung selbst ausführen und/oder einem Bediener erleichtern kann.

Zudem wird vorgeschlagen, dass die Zähigkeitserfassungseinheit in dem Betriebszustand zu einer Detektion des Zähigkeitsparameters zumindest eine Leistungsaufnahme einer Antriebseinheit der Rühreinheit erfasst und/oder detektiert und/oder ermittelt. Insbesondere erfasst die Zähigkeitserfassungseinheit in dem Betriebszustand zu einer Detektion des Zähigkeitsparameters die Leistungsaufnahme der Antriebseinheit der Rühreinheit durch Erfassung und/oder Detektion und/oder Ermittlung zumindest eines elektrischen Stroms, mittels welchem die Antriebseinheit in dem Betriebszustand insbesondere betrieben ist, und/oder zumindest einer elektrischen Spannung, welche in dem Betriebszustand insbesondere an der Antriebseinheit anliegt, und/oder zumindest eines elektrischen Widerstands der Antriebseinheit. Insbesondere ist die Leistungsaufnahme eines Objekts ein Quotient aus einer von dem Objekt aufgenommenen Energie, insbesondere aus einer von dem Objekt aufgenommenen elektrischen Energie, und einer Zeitspanne, innerhalb welcher das Objekt insbesondere die Energie aufnimmt. Dadurch kann der Zähigkeitsparameter insbesondere auf kostengünstige und/oder konstruktiv einfache Weise erfasst werden, wodurch insbesondere geringe Kosten und/oder eine unkomplizierte Ausgestaltung erzielt werden können.

Weiterhin wird vorgeschlagen, dass die Zähigkeitserfassungseinheit in dem Betriebszustand zu einer Detektion des Zähigkeitsparameters zumindest eine Beschleunigung der Rühreinheit, insbesondere zumindest eines Rührorgans der Rühreinheit und/oder zumindest einer Antriebseinheit der Rühreinheit, und/oder zumindest eine Umdrehungszahl der Rühreinheit, insbesondere zumindest eines Rührorgans der Rühreinheit und/oder zumindest einer Antriebseinheit der Rühreinheit, erfasst und/oder detektiert und/oder ermittelt. Die Zähigkeitserfassungseinheit könnte in dem Betriebszustand zu einer Detektion des Zähigkeitsparameters die Umdrehungszahl der Rühreinheit beispielsweise durch Erfassung und/oder Detektion und/oder Ermittlung zumindest einer Geschwindigkeit und/oder zumindest einer Winkelgeschwindigkeit und/oder zumindest einer Beschleunigung der Rühreinheit erfassen, und zwar insbesondere unter Kontrolle und/oder unter Konstanthalten einer Leistungsaufnahme der Rühreinheit. Die Zähigkeitserfassungseinheit könnte insbesondere zumindest einen Detektor aufweisen, welcher insbesondere als Beschleunigungssensor ausgebildet sein könnte, um insbesondere die Geschwindigkeit und/oder die Geschwindigkeitsänderung der Rühreinheit zu erfassen, und zwar insbesondere unter Kontrolle und/oder unter Konstanthalten einer Leistungsaufnahme der Rühreinheit. Insbesondere ist die Umdrehungszahl eines Objekts ein Quotient aus einer Anzahl an Umdrehungen und einer Zeitspanne, innerhalb welcher das Objekt insbesondere die Anzahl an Umdrehungen ausführt. Dadurch kann insbesondere eine genaue Erfassung des Zähigkeitsparameters ermöglicht werden, wodurch insbesondere optimierte Garergebnisse und/oder Zubereitungsergebnisse erzielt werden können.

Beispielsweise könnte die Zähigkeitserfassungseinheit in dem Betriebszustand zu einer Detektion des Zähigkeitsparameters ausschließlich zumindest eine Leistungsaufnahme einer Antriebseinheit der Rühreinheit und/oder zumindest eine Umdrehungszahl der Rühreinheit erfassen. Vorzugsweise erfasst und/oder detektiert und/oder ermittelt die Zähigkeitserfassungseinheit in dem Betriebszustand zu einer Detektion des Zähigkeitsparameters zumindest eine Geschwindigkeit der Rühreinheit und/oder zumindest eine Geschwindigkeitsänderung der Rühreinheit, insbesondere zumindest eines Rührorgans der Rühreinheit und/oder zumindest einer Antriebseinheit der Rühreinheit. Die Zähigkeitserfassungseinheit könnte insbesondere zumindest einen Detektor aufweisen, welcher insbesondere als Beschleunigungssensor ausgebildet sein könnte, um insbesondere die Geschwindigkeit der Rühreinheit und/oder die Geschwindigkeitsänderung der Rühreinheit zu erfassen. Alternativ oder zusätzlich könnte die Zähigkeitserfassungseinheit zumindest einen Detektor aufweisen, welcher insbesondere in dem Betriebszustand zu einer Detektion des Zähigkeitsparameters zumindest einen Hall-Effekt und/oder zumindest eine elektrischen Kenngröße erfasst, wie beispielsweise einen elektrischen Strom und/oder eine elektrische Spannung und/oder einen elektrischen Widerstand. Insbesondere ist die Geschwindigkeit der Rühreinheit und/oder die Geschwindigkeitsänderung eines Objekts eine Änderung zumindest einer Geschwindigkeit des Objekts und/oder eine Änderung zumindest einer Winkelgeschwindigkeit des Objekts. Dadurch kann insbesondere auf schnelle Art und Weise eine grobe Erfassung des Zähigkeitsparameters erzielt werden, wodurch insbesondere eine preisgünstige Ausgestaltung und/oder eine schnelle Einschätzung eines Werts des Zähigkeitsparameters ermöglicht werden kann.

Die Zähigkeitserfassungseinheit könnte die Geschwindigkeit der Rühreinheit und/oder die Geschwindigkeitsänderung der Rühreinheit beispielsweise in einem Betrieb und/oder während ununterbrochenem Drehen des Rührorgans der Rühreinheit erfassen. Insbesondere könnte die Zähigkeitserfassungseinheit in dem Betriebszustand zu einer Detektion des Zähigkeitsparameters die Geschwindigkeit der Rühreinheit und/oder die Geschwindigkeitsänderung der Rühreinheit in einem Betrieb der Rühreinheit, insbesondere zumindest eines Rührorgans der Rühreinheit, erfassen. Vorzugsweise erfasst und/oder detektiert und/oder ermittelt die Zähigkeitserfassungseinheit in dem Betriebszustand zu einer Detektion des Zähigkeitsparameters zumindest eine Leistungsaufnahme zumindest einer Antriebseinheit der Rühreinheit beim Start eines Losdrehens zumindest eines Rührorgans der Rühreinheit. Die Zähigkeitserfassungseinheit in dem Betriebszustand zur Erfassung des Zähigkeitsparameters könnte beispielsweise eine der Rühreinheit zugeführten Leistung insbesondere kontinuierlich und/oder stetig und/oder monoton und/oder gleichmäßig steigern, und zwar insbesondere bis sich das Rührorgan der Rühreinheit in Bewegung versetzt. Insbesondere könnte die Zähigkeitserfassungseinheit eine minimale Leistung, bei welcher sich das Rührorgan der Rühreinheit in Bewegung versetzt, als Kenngröße zu einer Detektion des Zähigkeitsparameters heranziehen und/oder auswerten und/oder benutzen. Die Zähigkeitserfassungseinheit könnte in dem Betriebszustand insbesondere bei wenigstens einem Großteil aller und vorteilhaft bei jedem Start der Rühreinheit zu einer Detektion des Zähigkeitsparameters zumindest eine Leistungsaufnahme zumindest einer Antriebseinheit der Rühreinheit beim Start eines Losdrehens zumindest eines Rührorgans der Rühreinheit erfassen. Zumindest ein Detektor der Zähigkeitserfassungseinheit könnte beispielsweise ein Beschleunigungssensor und/oder ein Kontaktsensor und/oder ein Sensor zu einer Detektion zumindest einer Zustandsänderung der Rühreinheit sein. Dadurch kann der Zähigkeitsparameter insbesondere auf eine preisgünstige Art und Weise erfasst werden, wodurch insbesondere geringe Produktionskosten und/oder ein geringer Preis eines Haushaltsgeräts und/oder geringe Anschaffungskosten für einen Bediener ermöglicht werden können.

Ferner wird vorgeschlagen, dass die Zähigkeitserfassungseinheit in dem Betriebszustand zu einer Detektion des Zähigkeitsparameters zumindest ein Drehmoment der Rühreinheit, insbesondere zumindest eines Rührorgans der Rühreinheit und/oder zumindest einer Antriebseinheit der Rühreinheit, erfasst und/oder detektiert und/oder ermittelt, und zwar insbesondere unter Konstanthalten einer Leistungsaufnahme der Antriebseinheit der Rühreinheit und/oder unter Konstanthalten einer Geschwindigkeit der Antriebseinheit der Rühreinheit. Beispielsweise könnte zumindest ein Detektor der Zähigkeitserfassungseinheit wenigstens zu einem Großteil an dem Rührorgan der Rühreinheit angeordnet und insbesondere als ein Dehnungsmessstreifen ausgebildet sein. Insbesondere könnte die Zähigkeitserfassungseinheit in dem Betriebszustand zu einer Detektion des Zähigkeitsparameters zumindest eine Verformung des Rührorgans insbesondere bei konstanter Geschwindigkeit der Antriebseinheit erfassen und insbesondere aus der erfassten Verformung den Zähigkeitsparameter und/oder eine Zähigkeit des Mediums ermitteln. Das Rührorgan könnte beispielsweise wenigstens zu einem Großteil aus einem, insbesondere lebensmittelgeeigneten, weichen Material ausgebildet sein, wie beispielsweise aus Kunststoff und/oder Silikon. Insbesondere erfasst die Zähigkeitserfassungseinheit den Zähigkeitsparameter durch Erfassung zumindest eines Drehmoments der Rühreinheit im Fall eines Mediums, bei welchem eine Änderung einer Zähigkeit und/oder einer Viskosität gering ist. Dadurch kann der Zähigkeitsparameter insbesondere auf besonders präzise und/oder genaue Weise ermittelt werden, wodurch insbesondere optimierte Garergebnisse und/oder Zubereitungsergebnisse erzielt werden können.

Ferner wird vorgeschlagen, dass die Zähigkeitserfassungseinheit zu einer Detektion des Zähigkeitsparameters in unterschiedlicher Genauigkeit vorgesehen ist. Beispielsweise könnte die Zähigkeitserfassungseinheit den Zähigkeitsparameter in verschiedenen Betriebszuständen in unterschiedlicher Genauigkeit detektieren. Alternativ oder zusätzlich könnte die Zähigkeitserfassungseinheit den Zähigkeitsparameter in einem insbesondere einzigen und/oder gemeinsamen Betriebszustand zunächst mit einer gröberen Genauigkeit und anschließend mit einer feineren Genauigkeit detektieren, um insbesondere zunächst eine schnelle Einschätzung des Zähigkeitsparameters zu ermöglichen und anschließend insbesondere den Zähigkeitsparameter genau zu erfassen. Insbesondere könnte die Zähigkeitserfassungseinheit zu einer Detektion des Zähigkeitsparameters mit einer gröberen Genauigkeit zumindest eine Geschwindigkeit der Rühreinheit und/oder zumindest eine Geschwindigkeitsänderung der Rühreinheit, insbesondere zumindest eines Rührorgans der Rühreinheit und/oder zumindest einer Antriebseinheit der Rühreinheit, detektieren. Insbesondere könnte die Zähigkeitserfassungseinheit zu einer Detektion des Zähigkeitsparameters mit einer mittleren und/oder durchschnittlichen Genauigkeit zumindest eine Leistungsaufnahme zumindest einer Antriebseinheit der Rühreinheit beim Start eines Losdrehens zumindest eines Rührorgans der Rühreinheit detektieren. Insbesondere könnte die Zähigkeitserfassungseinheit zu einer Detektion des Zähigkeitsparameters mit einer feinen und/oder präzisen Genauigkeit zumindest ein Drehmoment der Rühreinheit, insbesondere zumindest eines Rührorgans der Rühreinheit und/oder zumindest einer Antriebseinheit der Rühreinheit, detektieren. Dadurch kann der Zähigkeitsparameter insbesondere flexibel detektiert werden. Insbesondere kann eine schnelle Abschätzung eines Werts der Zähigkeit des Mediums ermöglicht werden, bevor insbesondere eine genaue Detektion der Zähigkeit des Mediums erfolgt.

Beispielsweise könnte die Zähigkeitserfassungseinheit, insbesondere in jedem Betriebszustand, den Zähigkeitsparameter zunächst mit einer gröberen Genauigkeit und anschließend mit einer feineren Genauigkeit detektieren. Vorzugsweise ist die Zähigkeitserfassungseinheit dazu vorgesehen, den Zähigkeitsparameter in Abhängigkeit einer zu erwartenden Zähigkeit des Mediums in unterschiedlicher Genauigkeit zu detektieren. Insbesondere detektiert die Zähigkeitserfassungseinheit den Zähigkeitsparameter in dem Betriebszustand in Abhängigkeit einer zu erwartenden Zähigkeit des Mediums in unterschiedlicher Genauigkeit. Beispielsweise könnte die zu erwartende Zähigkeit des Mediums vorgegeben sein, wie beispielsweise durch zumindest eine Bedieneingabe mittels zumindest einer Bedienerschnittstelle und/oder durch zumindest einen Rezeptschritt des automatischen Garprozesses. Alternativ oder zusätzlich könnte die Zähigkeitserfassungseinheit die erwartende Zähigkeit des Mediums durch Detektion des Zähigkeitsparameters, insbesondere mit gröberer Genauigkeit, abschätzen und insbesondere anschließend eine Detektionsweise mit gewünschter und/oder passender Genauigkeit auswählen. Dadurch kann jeder Zähigkeitsparameter insbesondere optimal detektiert werden, wodurch insbesondere optimale Prozessergebnisse erzielt werden können.

Das Haushaltsgerätesystem könnte beispielsweise zumindest eine Ausgabeeinheit aufweisen, über welche die Zähigkeitserfassungseinheit insbesondere den Zähigkeitsparameter und/oder zumindest eine Zähigkeit des Mediums ausgeben könnte. Vorzugsweise weist das Haushaltsgerätesystem zumindest eine Ausgabeeinheit auf, über welche die Zähigkeitserfassungseinheit in Abhängigkeit von dem Zähigkeitsparameter zumindest eine Information bezüglich eines Prozessstatus, insbesondere eines automatischen Garprozesses, ausgibt. Unter einer "Ausgabeeinheit" soll insbesondere eine Einheit verstanden werden, welche in wenigstens einem Betriebszustand, insbesondere einem Bediener, insbesondere optisch und/oder akustisch und/oder haptisch zumindest eine Kenngröße bereitstellt. Zumindest eine Kenngröße könnte beispielsweise eine Information und/oder eine Zeitangabe und/oder eine Bedienaufforderung und/oder eine Handlungsaufforderung und/oder eine Auswahl und/oder ein mit einem Gargeschirr verknüpfter Status sein. Vorteilhaft könnte zumindest eine Kenngröße zumindest eine Information bezüglich eines Prozessstatus, insbesondere eines automatischen Garprozesses, sein. Die Ausgabeeinheit könnte insbesondere in wenigstens einem Betriebszustand wenigstens ein akustisches Signal und/oder insbesondere wenigstens eine akustische Sequenz ausgeben, wie beispielsweise einen Klingelton und/oder ein Warnsignal und/oder eine Aufforderung in Form eines insbesondere vorgefertigten Satzes. Alternativ oder zusätzlich könnte die Ausgabeeinheit in wenigstens einem Betriebszustand zumindest eine optische Ausgabe bereitstellen, wie beispielsweise eine Anzeige wenigstens eines Bilds und/oder wenigstens eines Texts und/oder wenigstens einer Ziffer und/oder wenigstens einer Animation. Beispielsweise könnte die Ausgabeeinheit zumindest ein Klangmittel aufweisen, welches insbesondere ein Lautsprecher sein könnte. Alternativ oder zusätzlich könnte die Ausgabeeinheit zumindest ein Leuchtmittel, vorteilhaft eine LED, und/oder ein insbesondere hinterleuchtetes Display, insbesondere ein Matrixdisplay und/oder eine Flüssigkristallanzeige und/oder ein LCD-Display und/oder ein OLED-Display und/oder elektronisches Papier, aufweisen. Dadurch kann insbesondere ein hoher Grad an Information und/oder Transparenz bereitgestellt werden, wodurch insbesondere ein hoher Bedienkomfort ermöglicht werden kann. Insbesondere können einem Bediener zusätzliche Informationen im Hinblick auf einen Garprozess und/oder einen Prozessstatus bereitgestellt werden, und zwar insbesondere in Zusammenhang mit einer Zubereitung zumindest einer Soße und/oder zumindest einer, insbesondere dickflüssigen Suppe und/oder zumindest eines Teigs und/oder zumindest eines cremigen Gemischs, wie beispielsweise einer dicken Suppe und/oder einer heißen Schokolade und/oder von Diätprodukten. Es kann insbesondere ein reproduzierbares und/oder optimiertes Garergebnis erreicht werden. Eine Zubereitungszeit zu einer Zubereitung eines Rezepts kann insbesondere optimiert werden.

Weiterhin wird vorgeschlagen, dass die Zähigkeitserfassungseinheit wenigstens teilweise an der Rühreinheit, insbesondere an zumindest einer Antriebseinheit der Rühreinheit und/oder an zumindest einem Rührorgan der Rühreinheit, angeordnet ist. Unter der Wendung, dass eine Einheit "wenigstens teilweise" an einem Objekt angeordnet ist, soll insbesondere verstanden werden, dass die Einheit zumindest ein Element aufweist, welches an dem Objekt angeordnet ist und insbesondere zusätzlich zu dem Element zumindest ein weiteres Element aufweisen könnte, welches getrennt von dem Objekt angeordnet sein könnte. Insbesondere könnte zumindest ein Detektor der Zähigkeitserfassungseinheit an der Rühreinheit, insbesondere an zumindest einer Antriebseinheit der Rühreinheit und/oder an zumindest einem Rührorgan der Rühreinheit, angeordnet sein. Zumindest eine Steuereinheit der Zähigkeitserfassungseinheit könnte beispielsweise in zumindest einem Haushaltsgerät, insbesondere in zumindest einem Gargerät und vorteilhaft in zumindest einem Kochfeld, angeordnet und insbesondere einstückig mit einer Geräte-Steuereinheit, insbesondere des Haushaltsgeräts, insbesondere des Gargeräts und vorteilhaft des Kochfelds, ausgebildet sein. Dadurch kann insbesondere eine kompakte Ausgestaltung erzielt werden. Insbesondere kann der Zähigkeitsparameter direkt in einem Nahbereich des Mediums erfasst werden, wodurch insbesondere kurze Signalwege und/oder eine geringe Fehlerquote erzielt werden kann.

Beispielsweise könnte die Zähigkeitserfassungseinheit wenigstens zu einem Großteil und vorteilhaft vollständig an der Rühreinheit angeordnet sein. Insbesondere könnte die Zähigkeitserfassungseinheit wenigstens zu einem Großteil und vorteilhaft vollständig in zumindest einem Haushaltsgerät, welches die Rühreinheit aufweist, integriert sein, wie beispielsweise in einem Rührgerät und/oder in einer Rührmaschine und/oder in einer Küchenmaschine und/oder in einer Knetmaschine. Vorzugsweise ist die Zähigkeitserfassungseinheit wenigstens teilweise in einem Gargerät integriert. Unter der Wendung, dass eine Einheit "wenigstens teilweise" in einem Gerät integriert ist, soll insbesondere verstanden werden, dass die Einheit zumindest ein Element aufweist, welches in dem Gerät integriert angeordnet ist und insbesondere zusätzlich zu dem Element zumindest ein weiteres Element aufweisen könnte, welches außerhalb des Geräts angeordnet sein könnte.

Insbesondere könnte zumindest eine Steuereinheit der Zähigkeitserfassungseinheit in dem Gargerät angeordnet sein. Zumindest ein Detektor der Zähigkeitserfassungseinheit könnte beispielsweise außerhalb des Gargeräts angeordnet sein, wie beispielsweise an der Rühreinheit, und/oder in zumindest einem weiteren Haushaltsgerät integriert sein, wie beispielsweise in einem Rührgerät und/oder in einer Rührmaschine und/oder in einer Küchenmaschine und/oder in einer Knetmaschine. Dadurch kann insbesondere eine geringe Bauteilevielfalt und/oder eine geringe Lagerhaltung erzielt werden. Insbesondere kann eine kompakte Ausgestaltung ermöglicht werden.

Weiterhin wird vorgeschlagen, dass das Haushaltsgeräteystem zumindest ein Gargeschirr aufweist, in welchem die Rühreinheit und/oder die Zähigkeitserfassungseinheit wenigstens zu einem Großteil und vorteilhaft vollständig integriert sind/ist. Insbesondere könnten die Rühreinheit und/oder die Zähigkeitserfassungseinheit wenigstens zu einem Großteil und vorteilhaft vollständig unlösbar in dem Gargeschirr integriert und/oder fest mit dem Gargeschirr verbunden sein. Zumindest ein Rührorgan der Rühreinheit könnte beispielsweise wenigstens zu einem Großteil in zumindest einem Lebensmittelaufnahmeraum des Gargeschirrs angeordnet sein. Zumindest eine Antriebseinheit der Rühreinheit könnte beispielsweise wenigstens zu einem Großteil in zumindest einer Gargeschirrgehäuseeinheit des Gargeschirrs angeordnet und/oder integriert sein. Zumindest eine Steuereinheit der Zähigkeitserfassungseinheit könnte beispielsweise wenigstens zu einem Großteil in zumindest einer Gargeschirrgehäuseeinheit des Gargeschirrs angeordnet und/oder integriert sein. Insbesondere könnte zumindest ein Detektor der Zähigkeitserfassungseinheit wenigstens zu einem Großteil an der Rühreinheit, insbesondere an zumindest einer Antriebseinheit der Rühreinheit und/oder an zumindest einem Rührorgan der Rühreinheit, angeordnet sein. Dadurch kann insbesondere eine kompakte Ausgestaltung erzielt werden.

Ein besonders hoher Bedienkomfort kann insbesondere erreicht werden durch ein Verfahren zu einem Betrieb eines erfindungsgemäßen Haushaltsgerätesystems, bei welchem mittels zumindest einer Rühreinheit zumindest ein Zähigkeitsparameter zumindest eines Mediums detektiert wird.

Zumindest ein Haushaltsgerät, insbesondere zumindest ein Gargerät und vorteilhaft zumindest ein Kochfeld, könnte beispielsweise mittels zumindest eines Baukastensystems mit einem erfindungsgemäßen Haushaltsgerätesystem hergestellt sein. Insbesondere könnte das Haushaltsgerätesystem zumindest einen Katalog an Zähigkeitserfassungseinheiten aufweisen, welche sich insbesondere jeweils in zumindest einem Merkmal unterscheiden könnte, wie beispielsweise in einer Genauigkeit einer Erfassung des Zähigkeitsparameters. Zu einer Herstellung des Haushaltsgeräts könnte beispielsweise in Abhängigkeit von einem Typ des Haushaltsgeräts und/oder von einer Preiskategorie des Haushaltsgeräts eine der Zähigkeitserfassungseinheiten aus dem Katalog an Zähigkeitserfassungseinheiten ausgewählt und insbesondere in dem Haushaltsgerät verbaut werden. Zumindest eine Zähigkeitserfassungseinheit, insbesondere des Katalogs an Zähigkeitserfassungseinheiten, könnte beispielsweise eine grobe Genauigkeit aufweisen und in dem Betriebszustand insbesondere zu einer Detektion des Zähigkeitsparameters zumindest eine Geschwindigkeit der Rühreinheit und/oder zumindest eine Geschwindigkeitsänderung der Rühreinheit erfassen. Zumindest eine Zähigkeitserfassungseinheit, insbesondere des Katalogs an Zähigkeitserfassungseinheiten, könnte beispielsweise eine mittlere und/oder durchschnittliche Genauigkeit aufweisen und in dem Betriebszustand insbesondere zu einer Detektion des Zähigkeitsparameters zumindest eine Leistungsaufnahme zumindest einer Antriebseinheit der Rühreinheit beim Start eines Losdrehens zumindest eines Rührorgans der Rühreinheit erfassen. Zumindest eine Zähigkeitserfassungseinheit, insbesondere des Katalogs an Zähigkeitserfassungseinheiten, könnte beispielsweise eine feine und/oder präzise Genauigkeit aufweisen und in dem Betriebszustand insbesondere zu einer Detektion des Zähigkeitsparameters zumindest ein Drehmoment der Rühreinheit erfassen. Dadurch kann insbesondere eine hohe Flexibilität erzielt werden. Insbesondere kann ein Haushaltsgerät flexibel auf die Bedürfnisse eines jeweiligen Bedieners und/oder eines jeweiligen Zielbereichs an Kunden zugeschnitten werden, wodurch insbesondere ein breites Spektrum an Kunden zufrieden gestellt werden kann.

Das Haushaltsgerätesystem soll hierbei nicht auf die oben beschriebene Anwendung und Ausführungsform beschränkt sein. Insbesondere kann das Haushaltsgerätesystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Haushaltsgerätesystem mit einem Haushaltsgerät und mit einem Gargeschirr in einer schematischen Draufsicht,
- Fig. 2: das Gargeschirr, innerhalb welchem ein Medium angeordnet ist, eine Zähigkeitserfassungseinheit und eine Rühreinheit des Haushaltsgerätesystems in einer schematischen Darstellung,
- Fig. 3: ein Diagramm, in welchem sowohl eine Temperatur des Mediums als auch eine Zähigkeit des Mediums über einer Zeit aufgetragen sind, in einer schematischen Darstellung und
- Fig. 4: einen Ausschnitt eines Gargeschirrs, eine Rühreinheit und eine Zähigkeitserfassungseinheit eines alternativen Haushaltsgerätesystems in einer schematischen Darstellung.

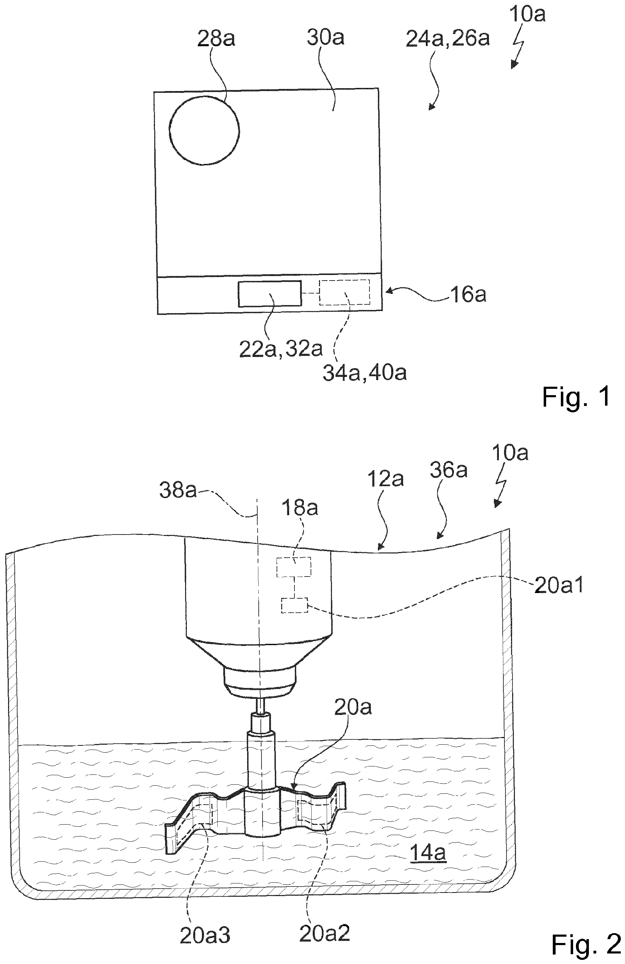

Figur 1 zeigt ein Haushaltsgerätesystem 10a mit einem Haushaltsgerät 26a, welches als ein Gargerät 24a ausgebildet ist, und mit einem Gargeschirr 28a. Im vorliegenden Ausführungsbeispiel ist das Haushaltsgerät 26a als ein Kochfeld, und zwar insbesondere als ein Induktionskochfeld, ausgebildet.

Das Haushaltsgerät 26a weist eine Aufstellplatte 30a auf. In einem montierten Zustand bildet die Aufstellplatte 30a eine Sichtfläche aus, welche in einem montierten Zustand insbesondere einem Bediener zugewandt angeordnet ist. Die Aufstellplatte 30a ist zu einem Aufstellen von Gargeschirr 28a zum Zweck einer Beheizung des Gargeschirrs 28a vorgesehen. Im vorliegenden Ausführungsbeispiel ist die Aufstellplatte 30a als eine Kochfeldplatte ausgebildet.

Das Haushaltsgerätesystem 10a weist das Gargeschirr 28a auf. Das Gargeschirr 28a ist zu einem Aufstellen auf der Aufstellplatte 30a zum Zweck einer Beheizung des Gargeschirrs 28a vorgesehen.

Das Haushaltsgerät 26a weist zumindest eine Heizeinheit auf (nicht dargestellt). Im vorliegenden Ausführungsbeispiel weist das Haushaltsgerät 26a eine Vielzahl an Heizeinheiten auf. Alternativ könnte das Haushaltsgerät 26a beispielsweise eine kleinere Anzahl an Heizeinheiten aufweisen, wie beispielsweise genau eine Heizeinheit und/oder zumindest zwei, insbesondere zumindest vier, vorteilhaft zumindest acht, besonders vorteilhaft zumindest zwölf und vorzugsweise mehrere Heizeinheiten. Die Heizeinheiten könnten beispielsweise in Form einer Matrix angeordnet sein. Im Folgenden wird lediglich eine der Heizeinheiten beschrieben.

Die Heizeinheit ist in einer Einbaulage unterhalb der Aufstellplatte 30a angeordnet. Die Heizeinheit ist dazu vorgesehen, zumindest ein auf der Aufstellplatte 30a oberhalb der Heizeinheit aufgestelltes Gargeschirr 28a zu erhitzen. Die Heizeinheit ist als Induktionsheizeinheit ausgebildet.

Das Haushaltsgerät 26a weist eine Geräte-Bedienerschnittstelle 32a auf. Die Geräte-Bedienerschnittstelle 32a ist zu einer Eingabe und/oder Auswahl von Betriebsparametern vorgesehen, wie beispielsweise einer Heizleistung und/oder einer Heizleistungsdichte und/oder einer Heizzone. Die Geräte-Bedienerschnittstelle 32a ist zu einer Ausgabe eines Werts eines Betriebsparameters an einen Bediener vorgesehen.

Das Haushaltsgerät 26a weist eine Geräte-Steuereinheit 34a auf. In einem Betriebszustand steuert und/oder regelt die Geräte-Steuereinheit 34a eine Gerätehauptfunktion. Die Geräte-Steuereinheit 34a ist dazu vorgesehen, in Abhängigkeit von mittels der Geräte-Bedienerschnittstelle 32a eingegebener Betriebsparameter, Aktionen auszuführen und/oder Einstellungen zu verändern. Die Geräte-Steuereinheit 34a regelt in dem Betriebszustand eine Energiezufuhr zu der Heizeinheit.

Das Haushaltsgerätesystem 10a weist eine Rühreinheit 12a auf (vgl. Figur 2). Die Rühreinheit 12a ist zu einem Rühren eines Mediums 14a vorgesehen. Im vorliegenden Ausführungsbeispiel ist die Rühreinheit 12a zu einem Großteil in einem Rührgerät 36a des Haushaltsgerätesystems 10a integriert. Das Haushaltsgerätesystem 10a weist das Rührgerät 36a auf.

Die Rühreinheit 12a weist ein Rührorgan 20a auf. Das Rührorgan 20a ist in dem Betriebszustand mit einem zu rührenden Medium 14a in Kontakt angeordnet und ragt insbesondere teilweise in das zu rührende Medium 14a hinein. In dem Betriebszustand ist das Rührorgan 20a um eine Drehachse 38a drehbar gelagert.

Die Rühreinheit 12a weist eine Antriebseinheit 18a auf. Die Antriebseinheit 18a ist als eine elektrische Antriebseinheit 18a ausgebildet. Die Antriebseinheit 18a weist einen Elektromotor (nicht dargestellt) auf. In dem Betriebszustand treibt die Antriebseinheit 18a das Rührorgan 20a an. Die Antriebseinheit 18a rotiert in dem Betriebszustand das Rührorgan 20a um die Drehachse 38a.

Das Haushaltsgerätesystem 10a weist eine Zähigkeitserfassungseinheit 16a auf (vgl. Figuren 1 und 2). In einem Betriebszustand detektiert die Zähigkeitserfassungseinheit 16a mittels der Rühreinheit 12a einen Zähigkeitsparameter des Mediums 14a. Im vorliegenden Ausführungsbeispiel ist das Medium 14a als ein Fluid ausgebildet, und zwar insbesondere als eine Flüssigkeit. Die Zähigkeitserfassungseinheit 16a detektiert in dem Betriebszustand mittels der Rühreinheit 12a einen Viskositätsparameter des Mediums 14a.

Die Zähigkeitserfassungseinheit 16a detektiert den Zähigkeitsparameter in dem Betriebszustand in wenigstens einem Rezeptschritt eines automatischen Garprozesses. Die Geräte-Steuereinheit 34a führt in Abhängigkeit einer Bedieneingabe mittels der Geräte-Bedienerschnittstelle 32a einen automatischen Garprozess aus, welcher insbesondere durch die Bedieneingabe gestartet ist und/oder gestartet werden kann und welcher insbesondere ansonsten frei ist von einer Einwirkung eines Bedieners.

In dem Betriebszustand detektiert die Zähigkeitserfassungseinheit 16a den Zähigkeitsparameter in unterschiedlicher Genauigkeit. Die Zähigkeitserfassungseinheit 16a detektiert in einem Betriebszustand den Zähigkeitsparameter in Abhängigkeit einer zu erwartenden Zähigkeit in unterschiedlicher Genauigkeit.

Im vorliegenden Ausführungsbeispiel detektiert die Zähigkeitserfassungseinheit 16a den Zähigkeitsparameter in Abhängigkeit einer Bedieneingabe mittels der Geräte-Bedienerschnittstelle 32a mit einer durch die Bedieneingabe ausgewählten Genauigkeit. Eine Auswahl einer Genauigkeit einer Detektion des Zähigkeitsparameters erfolgt zeitlich betrachtet vor einem Start des automatischen Garprozesses.

Alternativ könnte die Zähigkeitserfassungseinheit 16a eine Auswahl einer Genauigkeit einer Detektion des Zähigkeitsparameters automatisch tätigen. Beispielsweise könnte alternativ oder zusätzlich eine Genauigkeit einer Detektion des Zähigkeitsparameters in dem automatischen Garprozess definiert und/oder vorgegeben sein. Die Zähigkeitserfassungseinheit 16a könnte alternativ oder zusätzlich eine Genauigkeit einer Detektion des Zähigkeitsparameters ermitteln, und zwar insbesondere durch Aktivierung verschiedener Detektoren 42a unterschiedlicher Genauigkeit und anschließender Auswahl des Detektors 42a mit der am besten geeigneten Genauigkeit.

In einem alternativen Ausführungsbeispiel könnte die Zähigkeitserfassungseinheit 16a zu einer Detektion des Zähigkeitsparameters mit genau einer Genauigkeit vorgesehen sein und insbesondere genau einen Detektor 42a zu einer Detektion des Zähigkeitsparameters aufweisen. Beispielsweise könnte die Zähigkeitserfassungseinheit 16a speziell auf einen Zielbereich an Kunden ausgelegt sein.

Zu einer Detektion des Zähigkeitsparameters in unterschiedlicher Genauigkeit weist die Zähigkeitserfassungseinheit 16a im vorliegenden Ausführungsbeispiel mehrere Detektoren 42a auf.

Die Zähigkeitserfassungseinheit 16a weist einen Detektor 42a1 auf, welcher zu einer Detektion des Zähigkeitsparameters zumindest eine Leistungsaufnahme der Rühreinheit 12a, insbesondere der Antriebseinheit 18a der Rühreinheit 12a, detektiert. In dem Betriebszustand detektiert die Zähigkeitserfassungseinheit 16a zu einer Detektion des Zähigkeitsparameters zumindest eine Leistungsaufnahme der Antriebseinheit 18a der Rühreinheit 12a. Der Detektor 42a1, welcher zu einer Detektion des Zähigkeitsparameters zumindest eine Leistungsaufnahme der Rühreinheit 12a detektiert, ist zu einem Großteil in der Rühreinheit 12a integriert und insbesondere in einem Nahbereich der Antriebseinheit 18a angeordnet. Beispielsweise könnte der Detektor 42a1, welcher zu einer Detektion des Zähigkeitsparameters zumindest eine Leistungsaufnahme der Rühreinheit 12a detektiert, ein elektrischer Sensor sein.

Die Zähigkeitserfassungseinheit 16a weist einen Detektor 42a2 auf, welcher zu einer Detektion des Zähigkeitsparameters zumindest eine Beschleunigung der Rühreinheit 12a, insbesondere des Rührorgans 20a der Rühreinheit 12a, detektiert. In dem Betriebszustand detektiert die Zähigkeitserfassungseinheit 16a zu einer Detektion des Zähigkeitsparameters zumindest eine Beschleunigung der Rühreinheit 12a. Der Detektor 42a2, welcher zu einer Detektion des Zähigkeitsparameters zumindest eine Beschleunigung der Rühreinheit 12a detektiert, ist zu einem Großteil an der Rühreinheit 12a, und zwar insbesondere an dem Rührorgan 20a der Rühreinheit 12a, angeordnet. Beispielsweise könnte der Detektor 42a2, welcher zu einer Detektion des Zähigkeitsparameters zumindest eine Beschleunigung der Rühreinheit 12a detektiert, ein Beschleunigungssensor und/oder ein Kontaktsensor sein.

Die Zähigkeitserfassungseinheit 16a weist einen Detektor 42a3 auf, welcher zu einer Detektion des Zähigkeitsparameters zumindest eine Verformung der Rühreinheit 12a, insbesondere des Rührorgans 20a der Rühreinheit 12a, detektiert. In dem Betriebszustand detektiert die Zähigkeitserfassungseinheit 16a zu einer Detektion des Zähigkeitsparameters zumindest eine Verformung der Rühreinheit 12a. Der Detektor 42a3, welcher zu einer Detektion des Zähigkeitsparameters zumindest eine Verformung der Rühreinheit 12a detektiert, ist zu einem Großteil an der Rühreinheit 12a, und zwar insbesondere an dem Rührorgan 20a der Rühreinheit 12a, angeordnet. Beispielsweise könnte der Detektor 42a3, welcher zu einer Detektion des Zähigkeitsparameters zumindest eine Verformung der Rühreinheit 12a detektiert, ein Dehnungsmessstreifen sein.

Die Zähigkeitserfassungseinheit 16a ist teilweise, insbesondere in Form der Detektoren 42a, an der Rühreinheit 12a angeordnet und/oder in der Rühreinheit 12a integriert.

Die Zähigkeitserfassungseinheit 16a weist eine Steuereinheit 40a auf. Die Steuereinheit 40a ist in dem Haushaltsgerät 26a, welches insbesondere als das Gargerät 24a ausgebildet ist, integriert. Die Steuereinheit 40a ist in dem Gargerät 24a integriert. Die Zähigkeitserfassungseinheit 16a ist teilweise in dem Gargerät 24a integriert.

Im Folgenden werden verschiedene Beispiele zu einer Detektion des Zähigkeitsparameters beschrieben. In einem insbesondere ersten Fall detektiert die Zähigkeitserfassungseinheit 16a in dem Betriebszustand zu einer Detektion des Zähigkeitsparameters eine Geschwindigkeit der Rühreinheit 12a, und zwar insbesondere der Antriebseinheit 18a der Rühreinheit 12a. Aus der Geschwindigkeit der Rühreinheit 12a ermittelt die Zähigkeitserfassungseinheit 16a in dem Betriebszustand eine Umdrehungszahl der Rühreinheit 12a, insbesondere der Antriebseinheit 18a der Rühreinheit 12a und damit insbesondere des Rührorgans 20a der Rühreinheit 12a. In dem Betriebszustand detektiert die Zähigkeitserfassungseinheit 16a, insbesondere mittels der Geschwindigkeit der Rühreinheit 12a, zu einer Detektion des Zähigkeitsparameters eine Umdrehungszahl der Rühreinheit 12a. Zu einer Detektion der Umdrehungszahl der Rühreinheit 12a und/oder der Geschwindigkeit der Rühreinheit 12a hält die Zähigkeitserfassungseinheit 16a eine Leistungsaufnahme der Rühreinheit 12a im Wesentlichen konstant. Eine Detektion des Zähigkeitsparameters mittels Detektion der Umdrehungszahl der Rühreinheit 12a und/oder der Geschwindigkeit der Rühreinheit 12a eignet sich insbesondere für Situationen, in welchen sich das Rührorgan 20a mit hoher Geschwindigkeit bewegt, und/oder für Medien 14a, die ihre Zähigkeit im Laufe eines Rührprozesses stark ändern, und/oder für Medien 14a mit hoher Zähigkeit, wie beispielsweise Teig.

In einem insbesondere zweiten Fall detektiert die Zähigkeitserfassungseinheit 16a in dem Betriebszustand zu einer Detektion des Zähigkeitsparameters eine Leistungsaufnahme der Antriebseinheit 18a der Rühreinheit 12a beim Start eines Losdrehens des Rührorgans 20a der Rühreinheit 12a. Die Zähigkeitserfassungseinheit 16a erhöht in dem Betriebszustand eine der Antriebseinheit 18a zugeführte Leistung kontinuierlich, und zwar insbesondere bis sich das Rührorgan 20a in Bewegung versetzt. In dem Betriebszustand ermittelt die Zähigkeitserfassungseinheit 16a aus der Leistungsaufnahme der Antriebseinheit 18a beim Start eines Losdrehens des Rührorgans 20a den Zähigkeitsparameter und damit insbesondere die Zähigkeit des Mediums 14a. Eine Detektion des Zähigkeitsparameters mittels Detektion der Leistungsaufnahme der Antriebseinheit 18a beim Start eines Losdrehens des Rührorgans 20a eignet sich insbesondere für Medien 14a, in welchen eine Bewegung des Rührorgans 20a weder konstant noch kontinuierlich ist.

In einem insbesondere dritten Fall detektiert die Zähigkeitserfassungseinheit 16a in dem Betriebszustand zu einer Detektion des Zähigkeitsparameters ein Drehmoment der Rühreinheit 12a, und zwar insbesondere des Rührorgans 20a der Rühreinheit 12a. Die Zähigkeitserfassungseinheit 16a detektiert in dem Betriebszustand eine Verformung der Rühreinheit 12a, insbesondere des Rührorgans 20a der Rühreinheit 12a, durch das Medium 14a. Aus dem Drehmoment und/oder der Verformung ermittelt die Zähigkeitserfassungseinheit 16a in dem Betriebszustand den Zähigkeitsparameter und damit insbesondere die Zähigkeit des Mediums 14a. In dem Betriebszustand hält die Zähigkeitserfassungseinheit 16a eine Leistungsaufnahme der Rühreinheit 12a im Wesentlichen konstant und detektiert insbesondere ein Drehmoment, welches zu einem Konstanthalten der Leistungsaufnahme der Rühreinheit 12a erforderlich ist. Eine Detektion des Zähigkeitsparameters mittels Detektion des Drehmoments der Rühreinheit 12a eignet sich insbesondere für Medien 14a, in welchen eine Zähigkeitsänderung in einem Rührprozess gering ist.

In Abhängigkeit von dem Zähigkeitsparameter gibt die Zähigkeitserfassungseinheit 16a in dem Betriebszustand zumindest eine Information bezüglich eines Prozessstatus aus. Die Zähigkeitserfassungseinheit 16a gibt die Information bezüglich des Prozessstatus über eine Ausgabeeinheit 22a aus. Das Haushaltsgerätesystem 10a weist die Ausgabeeinheit 22a auf. Die Ausgabeeinheit 22a ist im vorliegenden Ausführungsbeispiel in dem Haushaltsgerät 26a, welches insbesondere als das Gargerät 24a ausgebildet ist, intergiert. Die Ausgabeeinheit 22a ist einstückig mit der Geräte-Bedienerschnittstelle 32a ausgebildet.

In einem Verfahren zu einem Betrieb des Haushaltsgerätesystems 10a wird mittels der Rühreinheit 12a ein Zähigkeitsparameter des Mediums 14a detektiert. In Abhängigkeit von dem Zähigkeitsparameter wird zumindest eine Information bezüglich eines Prozessstatus ausgegeben.

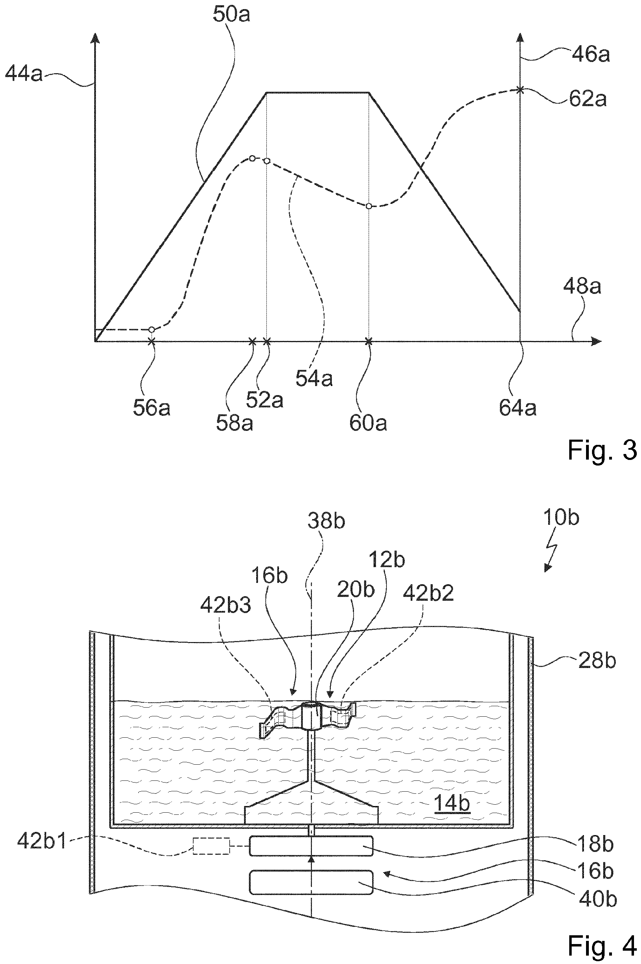

Figur 3 zeigt ein Diagramm in welchem sowohl eine Temperatur des Mediums 14a als auch eine Zähigkeit des Mediums 14a über einer Zeit aufgetragen sind. Auf einer linken Ordinatenachse 44a ist eine Temperatur des Mediums 14a aufgetragen. Auf einer rechten Ordinatenachse 46a ist eine Zähigkeit des Mediums 14a aufgetragen. Auf einer Abszissenachse 48a ist eine Zeit aufgetragen. Eine durchgezogen dargestellte Verlaufskurve 50a repräsentiert einen Verlauf der Temperatur des Mediums 14a. Eine gestrichelt dargestellte Verlaufskurve 54a repräsentiert einen Verlauf der Zähigkeit des Mediums 14a.

Die Temperatur des Mediums 14a steigt in dem Betriebszustand kontinuierlich, insbesondere linear, bis zu einem ersten Zeitpunkt 52a an. Die Verlaufskurve 50a der Temperatur des Mediums 14a bis zu dem ersten Zeitpunkt 52a repräsentiert eine Aufheizphase. In der Aufheizphase beginnt bei einem Gelierzeitpunkt 56a ein Gelierprozess des Mediums 14a, in welchem eine Zähigkeit des Mediums 14a ansteigt. In einem Nahbereich des ersten Zeitpunkts 52a erreicht die Zähigkeit des Mediums 14a einen lokalen Höhepunkt, und zwar insbesondere zu einem zweiten Gelierzeitpunkt 58a.

Zwischen dem ersten Zeitpunkt 52a und einem zweiten Zeitpunkt 60a ist die Verlaufskurve 50a der Temperatur konstant und weist insbesondere eine Steigung von im Wesentlichen Null auf. Zwischen dem ersten Zeitpunkt 52a und einem zweiten Zeitpunkt 60a sinkt die Zähigkeit des Mediums 14a und die Verlaufskurve 54a der Zähigkeit des Mediums 14a nimmt eine negative Steigung an.

Ab dem zweiten Zeitpunkt 60a beginnt eine Abkühlphase, in welcher die Verlaufskurve 50a der Temperatur des Mediums 14a und/oder eine Temperatur des Mediums 14a kontinuierlich, insbesondere linear, abnimmt. Ab dem zweiten Zeitpunkt 60a steigt die Verlaufskurve 54a der Zähigkeit des Mediums 14a an, und zwar insbesondere bis zu einem Maximalwert 62a. Die Verlaufskurve 54a der Zähigkeit des Mediums 14a nimmt den Maximalwert 62a zu einem dritten Zeitpunkt 64a an, an welchem sich die Verlaufskurve 50a der Temperatur des Mediums 14a und/oder die Temperatur des Mediums 14a in einem Nahbereich eines Ausgangswerts befindet.

In Figur 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figur 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt einen Ausschnitt eines Gargeschirrs 28b eines alternativen Haushaltsgerätesystems 10b. Das Haushaltsgerätesystem 10b weist das Gargeschirr 28b auf. Das Haushaltsgerätesystem 10b weist eine Rühreinheit 12b auf. Die Rühreinheit 12b ist in einem Betriebszustand zu einem Großteil in dem Gargeschirr 28b integriert. In dem Betriebszustand ist ein Rührorgan 20b der Rühreinheit 12b zu einem Großteil in einem Lebensmittelaufnahmeraum des Gargeschirrs 28b angeordnet. Eine Antriebseinheit 18b der Rühreinheit 12b ist in dem Betriebszustand zu einem Großteil in einer Gehäuseeinheit des Gargeschirrs 28b integriert.

Das Haushaltsgerätesystem 10b weist eine Zähigkeitserfassungseinheit 16b auf. Die Zähigkeitserfassungseinheit 16b ist in dem Betriebszustand zu einem Großteil in dem Gargeschirr 28b integriert. Die Zähigkeitserfassungseinheit 16b ist in dem Betriebszustand zu einem Großteil in der Gehäuseeinheit des Gargeschirrs 28b integriert.

### Bezugszeichen

- 10: Haushaltsgerätesystem
- 12: Rühreinheit
- 14: Medium
- 16: Zähigkeitserfassungseinheit
- 18: Antriebseinheit
- 20: Rührorgan
- 22: Ausgabeeinheit
- 24: Gargerät
- 26: Haushaltsgerät
- 28: Gargeschirr
- 30: Aufstellplatte
- 32: Geräte-Bedienerschnittstelle
- 34: Geräte-Steuereinheit
- 36: Rührgerät
- 38: Drehachse
- 40: Steuereinheit
- 42: Detektor
- 44: Ordinatenachse
- 46: Ordinatenachse
- 48: Abszissenachse
- 50: Verlaufskurve
- 52: Erster Zeitpunkt
- 54: Verlaufskurve
- 56: Gelierzeitpunkt
- 58: Zweiter Gelierzeitpunkt
- 60: Zweiter Zeitpunkt
- 62: Maximalwert
- 64: Dritter Zeitpunkt

## Patentansprüche

1. Haushaltsgerätesystem mit zumindest einer Rühreinheit (12a-b), welche zu einem Rühren zumindest eines Mediums (14a-b) vorgesehen ist, und mit zumindest einer Zähigkeitserfassungseinheit (16a-b), welche in wenigstens einem Betriebszustand mittels der Rühreinheit (12a-b) zumindest einen Zähigkeitsparameter des Mediums (14a-b) detektiert.

2. Haushaltsgerätesystem nach Anspruch 1, **dadurch gekennzeichnet, dass** die Zähigkeitserfassungseinheit (16a-b) den Zähigkeitsparameter in dem Betriebszustand in wenigstens einem Rezeptschritt zumindest eines automatischen Garprozesses detektiert.

3. Haushaltsgerätesystem nach Anspruch 1 oder 2, **dadurch gekennzeichnet, dass** die Zähigkeitserfassungseinheit (16a-b) in dem Betriebszustand zu einer Detektion des Zähigkeitsparameters zumindest eine Leistungsaufnahme einer Antriebseinheit (18a-b) der Rühreinheit (12a-b) detektiert.

4. Haushaltsgerätesystem nach einem der vorhergehenden Ansprüche, **dadurch gekennzeichnet, dass** die Zähigkeitserfassungseinheit (16a-b) in dem Betriebszustand zu einer Detektion des Zähigkeitsparameters zumindest eine Beschleunigung der Rühreinheit (12a-b) detektiert.

5. Haushaltsgerätesystem nach einem der vorhergehenden Ansprüche, **dadurch gekennzeichnet, dass** die Zähigkeitserfassungseinheit(16a-b) in dem Betriebszustand zu einer Detektion des Zähigkeitsparameters zumindest eine Geschwindigkeit der Rühreinheit (12a-b) detektiert.

6. Haushaltsgerätesystem nach einem der vorhergehenden Ansprüche, **dadurch gekennzeichnet, dass** die Zähigkeitserfassungseinheit (16a-b) in dem Betriebszustand zu einer Detektion des Zähigkeitsparameters zumindest eine Leistungsaufnahme der Antriebseinheit (18a-b) der Rühreinheit (12a-b) beim Start eines Losdrehens zumindest eines Rührorgans (20a-b) der Rühreinheit (12a-b) detektiert.

7. Haushaltsgerätesystem nach einem der vorhergehenden Ansprüche, **dadurch gekennzeichnet, dass** die Zähigkeitserfassungseinheit (16a-b) in dem Betriebszustand zu einer Detektion des Zähigkeitsparameters zumindest ein Drehmoment der Rühreinheit (12a-b) detektiert.

8. Haushaltsgerätesystem nach einem der vorhergehenden Ansprüche, **dadurch gekennzeichnet, dass** die Zähigkeitserfassungseinheit (16a-b) zu einer Detektion des Zähigkeitsparameters in unterschiedlicher Genauigkeit vorgesehen ist.

9. Haushaltsgerätesystem nach Anspruch 8, **dadurch gekennzeichnet, dass** die Zähigkeitserfassungseinheit (16a-b) dazu vorgesehen ist, den Zähigkeitsparameter in Abhängigkeit einer zu erwartenden Zähigkeit des Mediums (14a-b) in unterschiedlicher Genauigkeit zu detektieren.

10. Haushaltsgerätesystem nach einem der vorhergehenden Ansprüche,
**gekennzeichnet durch** zumindest eine Ausgabeeinheit (22a-b), über welche die Zähigkeitserfassungseinheit (16a-b) in Abhängigkeit von dem Zähigkeitsparameter zumindest eine Information bezüglich eines Prozessstatus ausgibt.

11. Haushaltsgerätesystem nach einem der vorhergehenden Ansprüche, **dadurch gekennzeichnet, dass** die Zähigkeitserfassungseinheit (16a-b) wenigstens teilweise an der Rühreinheit (12a-b) angeordnet ist.

12. Haushaltsgerätesystem nach einem der vorhergehenden Ansprüche, **dadurch gekennzeichnet, dass** die Zähigkeitserfassungseinheit (16a) wenigstens teilweise in einem Gargerät (24a) integriert ist.

13. Haushaltsgerätesystem nach einem der vorhergehenden Ansprüche,
**gekennzeichnet durch** zumindest ein Gargeschirr (28b), in welchem die Rühreinheit (12b) und/oder die Zähigkeitserfassungseinheit (16b) wenigstens zu einem Großteil integriert ist.

14. Verfahren zu einem Betrieb eines Haushaltsgerätesystems (10a-b), insbesondere nach einem der Ansprüche 1 bis 13, bei welchem mittels zumindest einer Rühreinheit (12a-b) zumindest ein Zähigkeitsparameter zumindest eines Mediums (14a-b) detektiert wird.
